# EUROPEAN PATENT SPECIFICATION

(11) **EP 3 096 151 B1**
(45) Date of publication and mention of the grant of the patent: **07.03.2018**
(21) Application number: 16170237.8
(22) Date of filing: 18.05.2016
(51) Int. Cl.: G01P 13/02, B64F 1/18

(54) **DEVICE FOR INDICATING WIND DIRECTION**
VORRICHTUNG ZUR ANZEIGE DER WINDRICHTUNG
DISPOSITIF D'AFFICHAGE DE LA DIRECTION DU VENT

(30) Priority: 22.05.2015 IT UB20150764
(43) Date of publication of application: 23.11.2016
(73) Proprietor: C&E GROUP SRL, 23848 Oggiono - Lecco (LC) (IT)
(72) Inventor: Di Giovine, Vincenzo, I-23900 Lecco (LC) (IT)
(74) Representative: Gallo, Luca

(56) References cited:
- EP-A2- 1 426 769
- WO-A2-2008/050240
- DE-A1- 10 147 090
- US-A- 1 913 672

## Description

### Field of application

The present invention refers to a signaling apparatus, according to the preamble of the independent claim 1.

The present signaling apparatus is provided with a support post, in particular with several meters height, with at the top thereof a signaling body arranged such as a windsock, a flag, etc.

In particular, the present apparatus is provided with a lighting system actuatable in order to illuminate the aforesaid signaling body of the apparatus itself in conditions of poor visibility, such as at night, in the presence of fog etc.

### State of the art

Signaling apparatuses are known on the market that are adapted to indicate the direction and intensity of the wind at airports, heliports, railway bridges, bridges, industrial factories such as chemical plants, etc. Such apparatuses conventionally comprise a support post fixed to the ground and a signaling body of tubular form (termed windsock in the jargon of the field) rotatably constrained to the upper end of the support post and generally colored with alternating white and red bands.

More in detail, the signaling body is made of flexible material (such as fabric) and is extended with a substantially frustoconical shape between a first wider end edge thereof, constrained to the support post, and a second narrower, free end edge thereof. In addition, the signaling body is provided with an internal channel communicating with the outside by means of a first wider opening delimited by the first end edge and an opposite second narrower opening delimited by the second end edge.

In particular, the first end edge of the signaling body is fixed to a support ring, which is in turn fixed to a rotatable arm idly mounted on the support post.

In operation, the wind is susceptible to enter into the internal channel of the signaling body through the first wider opening of the latter and, since the narrower second opening allows less air to exit than that which enters from the first opening, the wind inflates the signaling body, which consequently rotates the rotatable arm until it is arranged longitudinally aligned with the direction of the wind.

Wind detection apparatuses have for some time been known on the market. These are provided with one or more light sources adapted to illuminate the signaling body in conditions of poor visibility, such as at night, in the presence of fog etc.

For example, apparatuses are known which comprise a lighting device rigidly fixed on the upper end of the support post above the signaling body, and provided with four arms projecting orthogonally to each other, each of which bearing a downward-facing projector at a free end thereof.

During the night, the four projectors are all turned on so as to illuminate the entire zone around the support post, in order to illuminate the signaling body whatever direction it assumes when inflated by the wind.

A first drawback of this signaling apparatus of known type is due to the fact that it requires turning on all projectors simultaneously in order to illuminate the signaling body in the different possible positions that it can assume, with a consequent high energy consumption.

A further drawback of the above-described signaling apparatus of known type is due to the fact that, in case of failure of one or more of the projectors, the operator must climb to the top of the post in order to execute the substitution or the repair of the projectors themselves, with the need to operate in difficult and dangerous conditions, given that the post is usually even 4-7 meters high.

A further drawback of the above-described signaling apparatus of known type is due to the fact that, when the signaling body is arranged in an intermediate position between two projecting arms of the lighting device, most of the light emitted by the projectors does not hit the signaling body, which therefore is not illuminated in an optimal manner and hence results poorly visible.

The patents US 1,913,672, WO 2008/050240 and EP 1426769 describe wind signaling apparatuses of known type, each of which comprising a support post which supports a windsock at the top thereof, and a lamp mounted on the top of the post that is adapted to illuminate the windsock.

Also the latter apparatuses of known type have the drawback of requiring an operator to ascent to the top of the post in order to execute the substitution or repair of the lamp.

### Presentation of the invention

In this situation, the main object of the present invention is therefore that of overcoming the drawbacks manifested by the solutions of known type, by providing a signaling apparatus that allows executing maintenance and repair operations in a simple and safe manner.

Further object of the present invention is to provide a signaling apparatus that is structurally simple and inexpensive to produce.

Further object of the present invention is to provide a signaling apparatus which is simple and quick to install.

Further object of the present invention is to provide a signaling apparatus that is entirely reliable and efficient in operation.

### Brief description of the drawings

The technical characteristics of the invention, according to the aforesaid objects, are clearly seen in the contents of the below-reported claims and the advantages thereof will be clearer from the following detailed description, made with reference to the enclosed drawings, which represent several merely exemplifying and non-limiting embodiments of the invention, in which:
- figure 1 shows a side view of the signaling apparatus, object of the present invention, in accordance with a first embodiment;
- figure 2 shows a front view of the signaling apparatus illustrated in figure 1;
- figure 3 shows a detail of the apparatus illustrated in figure 1, relative to the reflecting body and to the signaling body arranged at the upper end of the support post;
- figure 4 shows a sectional detail of the apparatus, object of the present invention, relative to the rotatable support frame on which the reflecting body and the signaling body are mounted;
- figure 5 shows a side view of the signaling apparatus, object of the present invention, in accordance with a second embodiment.

### Detailed description of a preferred embodiment

With reference to the set of drawings, reference number 1 overall indicates the signaling apparatus that is the object of the present invention.

The present signaling apparatus 1 comprises a support structure 2 provided with a support post 3 internally hollow, which preferably has several meters height, e.g. 4-7 meters height. The support post 3 extends longitudinally, along a substantially vertical extension direction X, between a lower end 4 thereof, intended to be fixed to the ground, and an upper end 5 thereof in particular placed at several meters from the ground (e.g. at a height of about 4-7 meters).

In addition, the signaling apparatus 1 comprises a signaling body 6 hung from the support structure 2 at the upper end 5 of the support post 3, and preferably made of flexible material.

In particular, the signaling body 6 is susceptible of being moved around the support post 3 by the action of the wind.

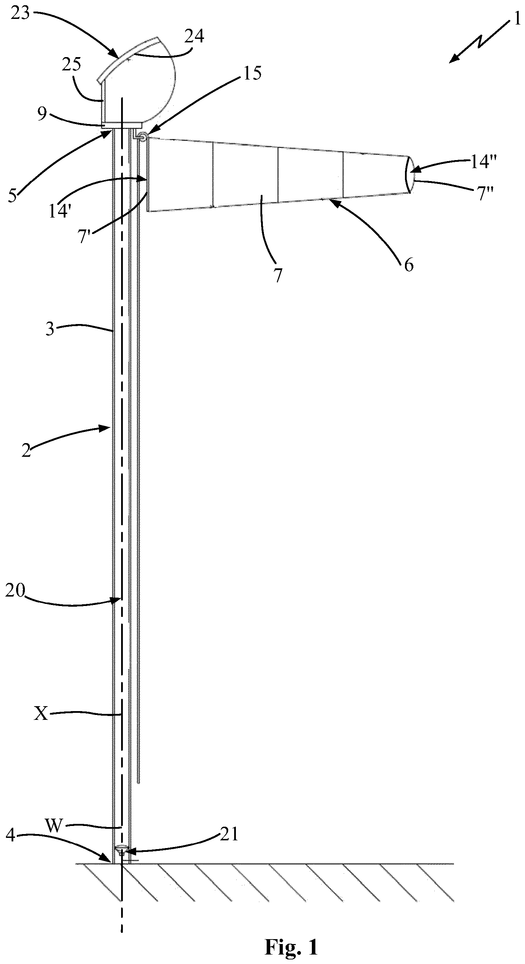

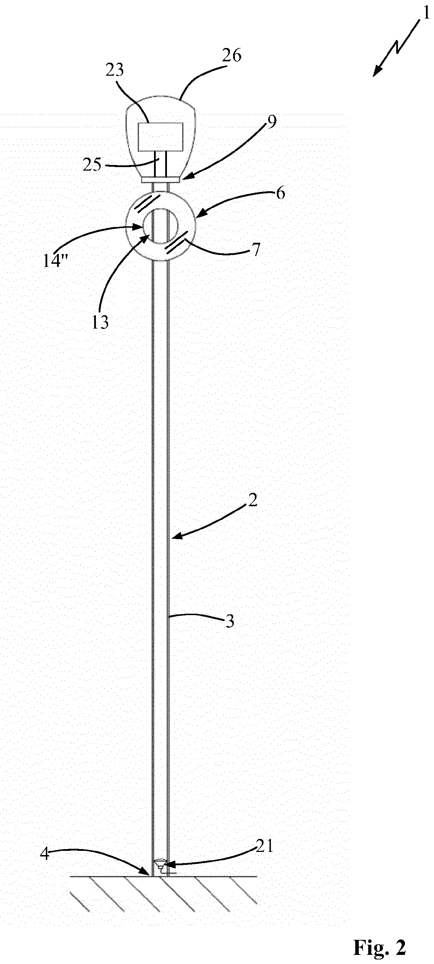

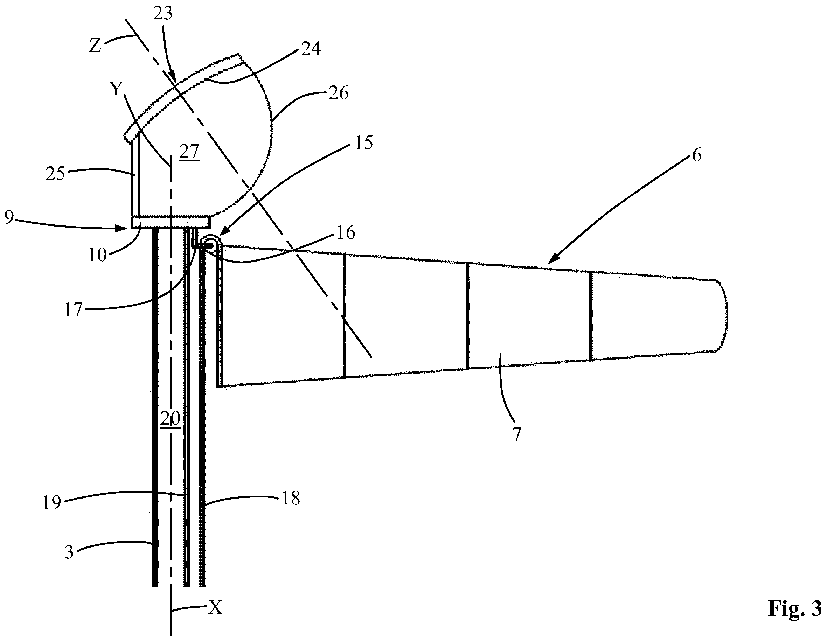

In accordance with a first embodiment of the present invention illustrated in figures 1-3, the signaling body 6 comprises a windsock 7 which preferably has a substantially tubular form and is intended to be inflated by the wind in order to indicate the direction and intensity of the latter, as described in detail hereinbelow.

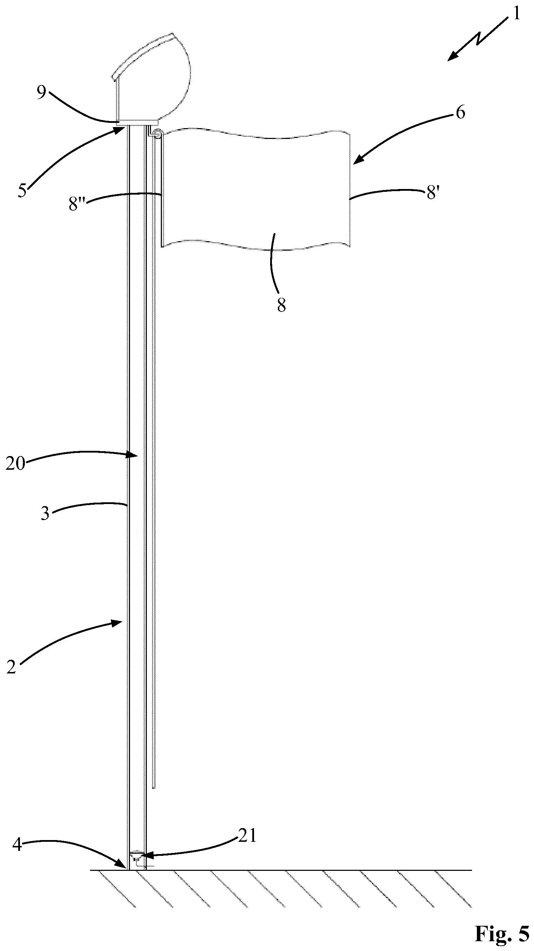

In accordance with a second embodiment illustrated in figure 5, the signaling body comprises a flag 8 susceptible of waving when subjected to the action of the wind. Preferably, the support structure 2 of the signaling apparatus 1 comprises a rotatable frame 9 idly hinged to the support post 3 at the upper end 5 of the latter, and bearing the signaling body 6 mounted thereon.

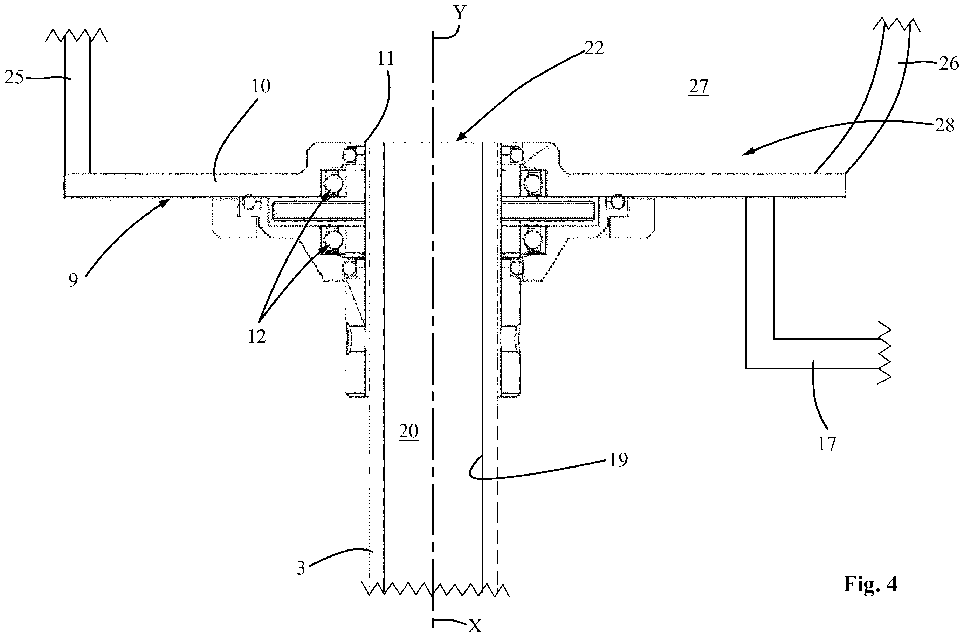

In particular, the rotatable frame 9 can be actuated to rotate by the signaling body 6 when the latter is subjected to the action of the wind, as described in detail hereinbelow. More in detail, the rotatable frame 9 is arranged for rotating around a rotation axis Y thereof that is substantially parallel to the extension direction X of the support post 3. Advantageously, in accordance with the particular embodiment illustrated in figure 4, the rotatable frame 9 comprises a base portion 10 with preferably plate-like form and provided with a through hole 11 aligned with the extension direction X of the support post 3.

Advantageously, the rotatable frame 9 is also provided with one or more slide means 12, such as ball bearings, interposed between the edge of the through hole 11 of the base portion 10 and the support post 3 and adapted to allow the idle rotation of the base portion 10 with respect to the support post 3 itself.

In accordance with the first embodiment illustrated in figures 1-3, the windsock 7 of the signaling body 6 extends longitudinally, with preferably frustoconical shape, between a first end 7' thereof and a second end 7" thereof, at which the signaling body 6 is respectively provided with a first edge constrained to the rotatable frame 9, and with a second edge preferably with width smaller than that of the first edge.

The windsock 7 of the signaling body 6 is advantageously provided with an internal channel 13 extended between the first end 7' and the second end 7" of the windsock 7 itself, and connected with the outside by means of a first wider opening 14', delimited by the first edge of the first end 7', and a second narrower opening 14", delimited by the second edge of the second end 7".

The wind is susceptible of entering inside the windsock 7 through the first (wider) opening 14' of the latter, acting on the windsock 7 in order to rotate the rotatable frame 9 around the support post 3 until the windsock 7 of the signaling body 6 is aligned with the direction of the wind.

More in detail, advantageously, the wind is susceptible to enter the internal channel 13 of the windsock 7 through the first opening 14' of the latter and, since the narrower second opening 14" allows less air to exit from the windsock 7 air than that which enters from the wider first opening 14', the wind inflates the windsock 7, which consequently rotates the rotatable frame 9 until it is longitudinally aligned with the wind direction.

In accordance with the second embodiment illustrated in figure 5, the flag 8 of the signaling body 6 has substantially sheet-like form and extends longitudinally between a third edge 8' constrained to the rotatable frame 9 and a free fourth edge 8".

In operation, the wind is susceptible to make the flag 8 wave by acting on the faces of the latter and extend the flag until it is arranged in substantially radial position with respect to the extension direction X of the support post 3. In this manner, the flag 8 extended by the wind then rotates the rotatable frame 9 until it is longitudinally aligned with the wind direction.

Advantageously, in accordance with the embodiments illustrated in the enclosed figures, the rotatable frame 9 of the support structure 2 bears, fixed thereto, a movement pulley system 15 connected to the signaling body 6 and actuatable for moving the latter along the support post 3 in order to lift the signaling body 6 itself up to the upper end 5 of the support post 3 or to bring it back to the ground at the lower end 4 of the support post 3. In particular, the movement pulley system 15 comprises a pulley 16 connected, by means of a support arm 17, to the base portion 10 of the rotatable frame 9 and a rope 18 abutted against the pulley 16 and bearing the signaling body 6 fixed thereto.

According to the invention, the support post 3 of the support structure 2 is provided with an internal surface 19 which delimits a channel 20 extending between the lower end 4 and the upper end 5 of the support post 3, in particular parallel to the extension direction X of the support post 3 itself.

In accordance with the idea underlying the present invention, the signaling apparatus 1 comprises a light source 21 arranged at the lower end 4 of the support post 3 and adapted to emit light beams inside channel 20 of the support post 3 itself. The latter is provided with an upper window 22 obtained at the upper end 5 thereof and through which the light beams emitted by the light source 21 exit from the channel 20 of the support post 3.

Advantageously, the upper window 22 of the support post 3 is delimited by a corresponding end edge of the post 3 and is preferably positioned aligned with the extension direction X of the support post 3 itself.

The internal surface 19 of the support post 3 is made of reflecting material and is arranged in order to at least partially reflect the light beams, emitted by the light source 21, inside channel 20 of the support post 3 towards the upper window 22 of the latter.

In addition, the signaling apparatus 1 comprises a reflecting body 23 mounted on the support structure 2 at the upper end 5 of the support post 3, and provided with a reflecting surface 24 which is positioned in front of the upper window 22 of the support post 3 in order to intercept the light beams exiting from the channel 20 of the support post 3 itself, and faces the signaling body 6 in order to reflect such light beams towards the latter in order to illuminate it.

More in detail, the light beams reflected by the reflecting surface 24 of the reflecting body 23 are mainly diffused along a light reflection axis Z having at least one component that is substantially radial with respect to the extension direction X of the support post 3 and intercepting the signaling body 6.

Advantageously, the aforesaid reflecting body 23 is mounted on the rotatable frame 9 of the support structure 2, in a manner such that the reflecting surface 24 always faces the signaling body 6 with the variation of the wind direction.

In particular, the reflecting body 23 is fixed to the rotatable frame 9 preferably to the base portion 10 of the latter by means of a support wall 25.

Advantageously, the reflecting surface 24 of the reflecting body 23 is made of metal material, in particular aluminum.

In accordance with a different embodiment, the reflecting surface 24 of the reflecting body 23 is for example obtained with a mirror.

Advantageously, the signaling body 6 is positioned at a lower height than the reflecting body 23, whose reflecting surface 24 is positioned with the reflection axis Z thereof tilted downward so as to intercept the signaling body 6 itself.

Preferably, the reflecting body 23 is arranged above the upper end 5 of the support post 3, in particular with its reflecting surface 24 arranged above the upper window 22 of the support post 3 in order to intercept the light beams that exit from the channel 20 of the post 3 itself and reflect them towards the signaling body 6.

Advantageously, the reflecting surface 24 of the reflecting body 23 has concave shape, preferably substantially symmetric with respect to the reflection axis Z, in a manner so as to converge the light beams towards the signaling body 6.

Advantageously, the reflecting surface 24 of the reflecting body 23 is arranged in order to reflect the light beams with divergence angle centered on the reflection axis Z comprised between 20 and 60 degrees, and preferably of about 40 degrees, in a manner such to illuminate the signaling body 6, in particular also in the case of waving or shaking of the latter due to the action of the wind.

Advantageously, the signaling apparatus 1 comprises a closing bell 26 made of substantially transparent material, connected to the rotatable frame 9 and to the reflecting body 23 in order to protect the reflecting surface 24 of the latter.

With the term "substantially transparent" it is intended that the closing bell 26 can be made of perfectly transparent material, or of translucent material, or of material provided with pigments that only allow the passage of some light color bands.

For example, the closing bell 26 is made of glass, or of an optically uniform and plastic material, in particular an acrylic polymer such as PMMA.

The aforesaid closing bell 26 delimits, with the rotatable frame 9 and with the reflecting surface 24 of the reflecting body 23, an internal chamber 27 isolated from the outside so as to prevent weathering agents (such as rain, hail, wind, etc.) from damaging the reflecting surface 24, or so as to prevent such reflecting surface 24 from being dirtied by dust (e.g. transported by wind) or by animals such as birds or insects.

In particular, the closing bell 26 is extended in front of the reflecting surface 24 of the reflecting body 23 and preferably is provided with a peripheral edge fixed for a first section thereof to the reflecting body 23 advantageously along the edge of the reflecting surface 24, for a second section thereof to the rotatable frame 9, advantageously on the base portion 10 of the latter, and preferably for a third section thereof to the support wall 25 that connects the reflecting body 23 to the base portion 10 of the rotatable frame 9.

Advantageously, the internal chamber 27 of the closing bell 26 communicates with channel 20 of the support post 3 by means of a passage opening 28 obtained at the upper window 22 of the support post 3, in a manner such that the light beams that exit from the channel 20 of the support post 3 are not subjected to partial reflection against the material of the closing bell 26.

In particular, the passage opening 28 of the closing bell is positioned aligned with the upper window 22 of the support post with respect to the extension direction X of the latter.

Advantageously, the signaling apparatus 1 comprises a collimation lens (not illustrated in the enclosed figures) placed to intercept the light beams arriving from the reflecting surface 24 of the reflecting body 23 and adapted to converge such beams along the reflection axis Z in order to orient them towards the signaling body 6.

Preferably, the aforesaid collimation lens is obtained on at least one portion of the closing bell 26 that is extended between the reflecting surface 24 of the reflecting body 23 and the signaling body 6.

Advantageously, the light source 21 (adapted to emit the light beams into channel 20 of the support post 3) comprises a lighting device arranged inside channel 20 itself, in proximity to the lower end 4 of the support post 3, and preferably provided with a light emission axis W positioned substantially parallel to the extension direction X of the support post 3 itself.

In particular, the lighting device of the light source 21 is arranged for emitting the light beams with an emission cone having an amplitude comprised between 40 and 70 degrees and preferably of about 60 degrees, in a manner such that the rays are reflected by the internal surface 19 of the support post 3 along channel 20 of the latter until they reach the upper window 22 of the support post 3 itself.

In particular, the lighting device of the light source 21 is obtained with a device of LED type, or a laser device, or with a halogen lamp.

Advantageously, the internal surface 19 of the support post 20 is provided with a coating layer of the aforesaid reflecting material that is adapted to reflect the light beams (emitted by the light source 21) inside channel 20 of the support post 3 towards the upper window 22 of the latter.

Preferably, the aforesaid reflecting material comprises aluminum.

In particular, the coating layer of the internal surface 19 of the support post 3 is obtained with an aluminum film, preferably adhesive, applied on the internal surface 19 during the making of the support post 3.

More in detail, advantageously, the making of the support post 3 provides for forming two half-parts with semicircular section, preferably by means of molding, coating the internal surface of such half-parts with the aluminum film, and then joining the two coated half-parts so as to obtain the support post 3 with the internal surface 19 equipped with the aluminum coating layer.

Otherwise, the coating layer of the internal surface 19 of the support post 3 is obtained with an aluminum-based reflecting paint layer deposited on the internal surface 19, e.g. by means of atomizer nozzles.

In accordance with a further different embodiment, the reflecting material of the internal surface 19 of the support post 3 is obtained with a reflecting polymer material that is deposited in the form of a paint layer.

The invention thus conceived therefore attains the pre-established objects.

In particular, the arrangement of the light source 21 at the lower end 4 of the support post 3 allows accessing the light source 21, e.g. for executing maintenance or repair operations, in a comfortable and safe manner, in particular without having to climb up to the upper end 5 of the support post 3.

In addition, the arrangement of the internal surface 19 made of reflecting material of the support post 3 for transmitting the light beams towards the reflecting body 23 makes the present signaling apparatus 1 structurally simple to achieve and to install, since it is not necessary to arrange light sources at the upper end 5 of the support post 3, nor electrical power supply cables along the internal channel 20 of the support post 3.

In addition, the arrangement of the internal surface 19 made of reflecting material of the support post 3 allows the use of high power light sources 21, even for example 500 W, since the internal surface 19 made of reflecting material is substantially not susceptible to be damaged in the presence of high power light beams - unlike other light transmission means such as optical fibers.

## Claims

1. Signaling apparatus (1), which comprises:
- a support structure (2) comprising a support post (3) internally hollow, which extends longitudinally along an extension direction (X) between a lower end (4) thereof, adapted to be fixed to the ground, and an upper end (5) thereof, and is provided with an internal surface (19) which delimits a channel (20) extending between the lower end (4) and the upper end (5) of said support post (3);
- a signaling body (6) hung to said support structure (2) at the upper end (5) of said support post (3) and susceptible of being moved around said support post (3) by the action of the wind;
said signaling apparatus (1) being **characterized in that** it comprises:
- a light source (21) placed at the lower end (4) of said support post (3) and adapted to emit light beams inside channel (20) of said support post (3), which is provided with an upper window (22) obtained at said upper end (5) and through this upper window (22) said light beams are susceptible of exiting from said channel (20);
the internal surface (19) of said support post (3) being made of reflecting material and being arranged to at least partially reflect said light beams, emitted by said light source (21), inside said channel (20) towards said upper window (22);
- a reflecting body (23) mounted on said support structure (2) at the upper end (5) of said support post (3), and provided with a reflecting surface (24), which is positioned in front of the upper window (22) of said support post (3) in order to intercept said light beams exiting channel (20) of said support post (3), and faces said signaling body (6) in order to reflect said light beams towards said signaling body (6) mainly along a light reflection axis (Z) having at least one substantially radial component relative to the extension direction (X) of said support post (3).

2. Signaling apparatus (1) according to claim 1, **characterized in that** said signaling body (6) is positioned at a lower height than said reflecting body (23), which is arranged above the upper end (5) of said support post (3) with said reflecting surface (24) positioned with said light reflection axis (Z) tilted downwards.

3. Signaling apparatus (1) according to claim 1 or 2, **characterized in that** the reflecting surface (24) of said reflecting body (23) is of concave shape.

4. Signaling apparatus (1) according to any one of the preceding claims, **characterized in that** said support structure (2) comprises a rotatable frame (9) which is idly hinged to said support post (3) at the upper end (5) of the latter, and bears said signaling body (6) and said reflecting body (23) mounted thereon.

5. Signaling apparatus (1) according to claim 4, **characterized in that** it comprises a closing bell (26) made of transparent material connected to said rotatable frame (9) and said reflecting body (23) and delimiting with said rotatable frame (9) and with the reflecting surface (24) of said reflecting body (23) an internal chamber (27) communicating with channel (20) of said support post (3) through at least one passage opening (28) obtained at the upper window (22) of said support post (3).

6. Signaling apparatus (1) according to any one of the preceding claims, **characterized in that** the reflecting surface (24) of said reflecting body (23) is arranged for reflecting said light beams with a divergence angle, centered on said light reflection axis (Z), comprised between 20 and 60 degrees.

7. Signaling apparatus (1) according to any one of the preceding claims, **characterized in that** it comprises at least one convergence lens placed to intercept the light beams arriving from the reflecting surface (24) of said reflecting body (23) and adapted to converge said light beams along said light reflection axis (Z).

8. Signaling apparatus (1) according to any one of the preceding claims, **characterized in that** the internal surface (19) of said support post (3) is provided with a coating layer of said reflecting material.

9. Signaling apparatus (1) according to any one of the preceding claims, **characterized in that** said reflecting material comprises aluminum.

## Patentansprüche

1. Vorrichtung zur Anzeige der Windrichtung (1), die Folgendes umfasst:
- eine tragende Struktur (2), die einen innen hohlen Stützpfeiler (3) umfasst, der längs einer Verlaufsrichtung (X) zwischen seinem unterem Ende (4), das am Boden zu befestigen ist, und seinem oberen Ende (5) folgt und mit einer einen Kanal (20) begrenzenden Innenfläche (19) ausgestattet ist, der zwischen dem unteren Ende (4) und dem oberen Ende (5) des genannten Stützpfeilers (3) verläuft;
- einen an der genannten tragenden Struktur (2) am oberen Ende (5) des genannten Stützpfeilers (3) aufgehängten Anzeigekörper (6), der geeignet ist, durch die Einwirkung des Windes um den genannten Stützpfeiler (3) herum bewegt zu werden;
wobei die genannte Vorrichtung zur Anzeige der Windrichtung (1) **dadurch gekennzeichnet ist, dass** sie Folgendes umfasst:
- eine am unteren Ende (4) des genannten Stützpfeilers (3) angeordnete Leuchtquelle (21), die in der Lage ist, in das Innere des Kanals (20) des genannten Stützpfeilers (3) Leuchtstrahlenbündel zu emittieren, der mit einem oberen Fenster (22) auf dem genannten oberen Ende (5) ausgestattet ist, über das die genannten Leuchtstrahlenbündel geeignet sind, aus dem genannten Kanal (20) auszutreten;
wobei die Innenfläche (19) des genannten Stützpfeilers (3) aus reflektierendem Material besteht und darauf ausgelegt ist, die von der genannten Leuchtquelle (21) in das Innere des genannten Kanals (20) in Richtung des genannten oberen Fensters (22) emittierten genannten Leuchtstrahlenbündel zumindest teilweise zu reflektieren;
- einen auf der genannten tragenden Struktur (2) auf dem oberen Ende (5) des genannten Stützpfeilers (3) montierten Reflektionskörper (23), der mit einer reflektierenden Oberfläche (24) ausgestattet ist, die vor dem oberen Fenster (22) des genannten Stützpfeilers (3) positioniert ist, um die genannten aus dem Kanal (20) des genannten Stützpfeilers (3) austretenden Leuchtstrahlen zu erfassen, und zu dem genannten Anzeigekörper (6) gerichtet ist, um die genannten Leuchtstrahlenbündel zu dem genannten Anzeigekörper (6) vorrangig entlang einer Lichtreflektionsachse (Z) zu reflektieren, die mindestens eine im Wesentlichen zu der Verlaufsrichtung (X) des genannten Stützpfeilers (3) radiale Komponente aufweist.

2. Vorrichtung zur Anzeige der Windrichtung (1) nach Anspruch 1, **dadurch gekennzeichnet, dass** der genannte Anzeigekörper (6) auf einer geringeren Höhe als der genannte Reflektionskörper (23) positioniert ist, der über dem oberen Ende (5) des genannten Stützpfeilers (3) angeordnet ist, wobei die genannte reflektierende Oberfläche (24) mit der genannten Lichtreflektionsachse (Z) nach unten geneigt positioniert ist.

3. Vorrichtung zur Anzeige der Windrichtung (1) nach Anspruch 1 oder 2, **dadurch gekennzeichnet, dass** die reflektierende Oberfläche (24) des genannten Reflektionskörpers (23) eine konkave Form aufweist.

4. Vorrichtung zur Anzeige der Windrichtung (1) nach einem beliebigen der vorangegangenen Ansprüche, **dadurch gekennzeichnet, dass** die genannte tragende Struktur (2) einen drehbaren Rahmen (9) umfasst, der lose am oberen Ende (5) des genannten Stützpfeilers (3) befestigt ist, an dem der genannte Anzeigekörper (6) und der genannte Reflektionskörper (23) montiert sind.

5. Vorrichtung zur Anzeige der Windrichtung (1) nach Anspruch 4, **dadurch gekennzeichnet, dass** sie eine Verschlussglocke (26) aus durchsichtigem Material umfasst, die mit dem genannten drehbaren Rahmen (9) und dem genannten Reflektionskörper (23) verbunden ist und mit dem genannten drehbaren Rahmen (9) und der reflektierenden Oberfläche (24) des genannten Reflektionskörpers (23) eine innere Kammer (27) begrenzt, die mit dem Kanal (20) des genannten Stützpfeilers (3) mittels einer Durchgangsöffnung (28) verbunden ist, die sich auf dem oberen Fenster (22) des genannten Stützpfeilers (3) befindet.

6. Vorrichtung zur Anzeige der Windrichtung (1) nach einem beliebigen der vorangegangenen Ansprüche, **dadurch gekennzeichnet, dass** die reflektierende Oberfläche (24) des genannten Reflektionskörpers (23) darauf ausgelegt ist, die genannten Leuchtstrahlenbündel mit einem auf der genannten Lichtreflektionsachse (Z) zentrierten Divergenzwinkel zwischen 20 und 60 Grad zu reflektieren.

7. Vorrichtung zur Anzeige der Windrichtung (1) nach einem beliebigen der vorangegangenen Ansprüche, **dadurch gekennzeichnet, dass** sie mindestens eine zur Erfassung der von der reflektierenden Oberfläche (24) des genannten Reflektionskörpers (23) kommenden Leuchtstrahlenbündel positionierte Konvergenzlinse umfasst, die geeignet ist, die genannten Leuchtstrahlenbündel entlang der genannten Lichtreflektionsachse (Z) zu konvergieren.

8. Vorrichtung zur Anzeige der Windrichtung (1) nach einem beliebigen der vorangegangenen Ansprüche, **dadurch gekennzeichnet, dass** die Innenfläche (19) des genannten Stützpfeilers (3) mit einer Beschichtung aus dem genannten reflektierenden Material versehen ist.

9. Vorrichtung zur Anzeige der Windrichtung (1) nach einem beliebigen der vorangegangenen Ansprüche, **dadurch gekennzeichnet, dass** das genannte reflektierende Material Aluminium umfasst.

## Revendications

1. Dispositif d'affichage de la direction du vent (1), comprenant :
- une structure de support (2) comprenant un poteau de support (3) creux à l'intérieur, lequel se développe selon une direction de développement (X) entre une extrémité inférieure (4), destinée à être fixée au sol et une extrémité supérieure (5) et dotée d'une surface interne (19) qui délimite un canal (20) qui s'étend entre l'extrémité inférieure (4) et l'extrémité supérieure (5) dudit poteau de support (3) ;
- un corps d'affichage (6) accroché à ladite structure de support (2) au niveau de l'extrémité supérieure (5) dudit poteau de support (3) et susceptible d'être déplacé autour dudit poteau de support (3) par l'action du vent ;
ledit dispositif d'affichage de la direction du vent (1) étant **caractérisé en ce qu'**il comprend :
- une source lumineuse (21) placée au niveau de l'extrémité inférieure (4) dudit poteau de support (3) et apte à émettre des faisceaux de rayons lumineux à l'intérieur du canal (20) dudit poteau de support (3), lequel est muni d'une fenêtre supérieure (22) réalisée au niveau de ladite extrémité supérieure (5) et à travers ladite fenêtre supérieure (22) lesdits faisceaux de rayons lumineux sont susceptibles de sortir dudit canal (20) ;
la surface interne (19) dudit poteau de support (3) étant en matériau réfléchissant et étant prédisposée pour réfléchir au moins partiellement lesdits faisceaux de rayons lumineux, émis par ladite source lumineuse (21), à l'intérieur dudit canal (20) vers ladite fenêtre supérieure (22) ;
- un corps de réflexion (23) monté sur ladite structure de support (2) au niveau de l'extrémité supérieure (5) dudit poteau de support (3) et muni d'une surface réfléchissante (24), laquelle est positionnée devant la fenêtre supérieure (22) dudit poteau de support (3) pour intercepter lesdits faisceaux de rayons lumineux sortant du canal (20) dudit poteau de support (3) et tournée vers ledit corps d'affichage (6) pour réfléchir lesdits faisceaux de rayons lumineux vers ledit corps d'affichage (6) essentiellement le long d'un axe de réflexion de la lumière (Z) ayant au moins un composant essentiellement radial par rapport à la direction de développement (X) dudit poteau de support (3).

2. Dispositif d'affichage de la direction du vent (1) selon la revendication 1, **caractérisé en ce que** ledit corps d'affichage (6) est positionné à une cote plus basse que ledit corps de réflexion (23), lequel est placé au-dessus de l'extrémité supérieure (5) dudit poteau de support (3) avec ladite surface réfléchissante (24) positionnée avec ledit axe de réflexion de la lumière (Z) incliné vers le bas.

3. Dispositif d'affichage de la direction du vent (1) selon la revendication 1 ou 2, **caractérisé en ce que** la surface réfléchissante (24) dudit corps de réflexion (23) a une forme concave.

4. Dispositif d'affichage de la direction du vent (1) selon l'une quelconque des revendications précédentes, **caractérisé en ce que** ladite structure de support (2) comprend un châssis tournant (9) lequel est monté sur pivot de façon folle sur ledit poteau de support (3) au niveau de l'extrémité supérieure (5) de ce dernier et porte montés, ledit corps d'affichage (6) et ledit corps de réflexion (23).

5. Dispositif d'affichage de la direction du vent (1) selon la revendication 4, **caractérisé en ce qu'**il comprend une cloche de fermeture (26) en matière transparente raccordée audit châssis tournant (9) et audit corps de réflexion (23) et délimitant par ledit châssis tournant (9) et par la surface réfléchissante (24) dudit corps de réflexion (23) une chambre interne (27) qui communique avec le canal (20) dudit poteau de support (3) moyennant au moins une ouverture de passage (28) réalisée au niveau de la fenêtre supérieure (22) dudit poteau de support (3).

6. Dispositif d'affichage de la direction du vent (1) selon l'une quelconque des revendications précédentes, **caractérisé en ce que** la surface réfléchissante (24) dudit corps de réflexion (23) est prédisposée pour réfléchir lesdits faisceaux de rayons lumineux avec un angle de divergence centré sur ledit axe de réflexion de la lumière (Z) compris entre 20 et 60 degrés.

7. Dispositif d'affichage de la direction du vent (1) selon l'une quelconque des revendications précédentes, **caractérisé en ce qu'**il comprend au moins une lentille de convergence placée pour intercepter les faisceaux de rayons lumineux provenant de la surface réfléchissante (24) dudit corps de réflexion (23) et apte à converger lesdits faisceaux de rayons lumineux le long dudit axe de réflexion de la lumière (Z).

8. Dispositif d'affichage de la direction du vent (1) selon l'une quelconque des revendications précédentes, **caractérisé en ce que** la surface interne (19) dudit poteau de support (3) est munie d'une couche de revêtement dudit matériau réfléchissant.

9. Dispositif d'affichage de la direction du vent (1) selon l'une quelconque des revendications précédentes, **caractérisé en ce que** ledit matériau réfléchissant comprend de l'aluminium.
